Europäisches Patentamt

European Patent Office

Office européen des brevets

(11) Veröffentlichungsnummer: **0 445 900 A1**

# (12) EUROPÄISCHE PATENTANMELDUNG

(21) Anmeldenummer: 91250055.0

(22) Anmeldetag: 04.03.91

(51) Int. Cl.⁵: **A63F 9/08**

(30) Priorität: 05.03.90 DE 9002685 U
06.03.90 DE 9002745 U

(43) Veröffentlichungstag der Anmeldung:
11.09.91 Patentblatt 91/37

(84) Benannte Vertragsstaaten:
DE ES FR GB IT

(71) Anmelder: AARCON PRAUSS ARMINIUS
GmbH
Kurfürstendamm 73
W-1000 Berlin 31 (DE)

(72) Erfinder: Prauss, Wolfgang
Konstanzerstr. 64
W-1000 Berlin 31 (DE)

(74) Vertreter: Scholz, Hartmut, Dipl.-Ing.
Bundesallee 74
W-1000 Berlin 41 (Friedenau) (DE)

(54) Raumkörper aus in Teilungen gegeneinander verdrehbaren Segmenten.

(57)    Ein Raumkörper (10) ist durch parallel zueinander verlaufende, sich rechtwinklig schneidende Teilungen (12, 12a, 13) in eine Vielzahl von Segmenten unterteilt. Die Segmente sind an dreidimensional senkrecht zueinander verlaufenden Gelenkwellen gegeneinander verdrehbar. Der Raumkörper (10) als eine Kugel (10) ausgebildet ist. Die Oberfläche (11) des Raumkörpers (10) weist reliefartige Erhöhungen und Vertiefungen oder einen Aufdruck auf, die den Konturen der Erd- oder Mondoberfläche entspricht.

FIG.1

EP 0 445 900 A1

## RAUMKÖRPER AUS IN TEILUNGEN GEGENEINANDER VERDREHBAREN SEGMENTEN

Beschreibung

Die Erfindung betrifft einen Raumkörper, der durch parallel zueinander verlaufende, sich rechtwinklig schneidende Teilungen in eine Vielzahl von Segmenten unterteilt ist, und die Segmente an dreidimensional senkrecht zueinander verlaufenden Gelenkwellen gegeneinander verdrehbar sind.

Ein solcher Raumkörper, wie er als Würfel aus der HU-PS 170 062 bekannt ist, gestattet eine Vielzahl von unterschiedlichen Kombinationen der Zuordnung der einzelnen Segmente. Die Segmente können farblich unterschiedlich gekennzeichnet sein, wobei immer eine der Würfelflächen mit der gleichen Farbe versehen ist. Sinn ist es, durch Geschicklichkeit und Kombination gleichfarbige Würfeloberflächen zusammenzustellen. Ein solcher Würfel verliert jedoch nach einiger Zeit seinen Reiz.

Aufgabe der vorliegenden Erfindung ist es, einen neuen Raumkörper der eingangs beschriebenen Art zu schaffen, der durch eine neue Gestalt Anreiz zu neuer Kombination gibt.

Gelöst wird diese Aufgabe dadurch, daß der Raumkörper als eine Kugel ausgebildet ist. Durch diese Maßnahmen wird ein neuer Raumkörper geschaffen, dessen Gestalt und Form neuen Spielanreize gibt.

Zur Ausgestaltung ist es dabei vorgesehen, daß die Oberfläche als Druckträger mit einem Globusaufdruck ausgebildet ist. Bei einer anderen Ausgestaltung ist es vorgesehen, daß die Oberfläche des Raumkörpers reliefartige Erhöhungen und Vertiefungen aufweist, die den Konturen der Erd- oder Mondoberfläche entspricht. Durch derartige Ausgestaltungen kann beim Spiel mit dem Raumkörper zugleich geographisches Wissen vermittelt werden.

Da die Kombinationsmöglichkeiten sehr groß sind, insbesondere Kinder aber einen raschen Erfolg erleben wollen, ist es bei einer vereinfachten Ausführung vorgesehen, daß in jeder der senkrecht zueinander verlaufenden Teilungsebenen nur eine Teilung verläuft.

Bei einer anderen Ausführung ist es vorgesehen, daß der Raumkörper als ein Würfel mit kugelig abgerundeten Ecken und teilzylindrig abgerundeten Kanten ausgebildet ist.

Weitere vorteilhafte Maßnahmen sind in den Unteransprüchen beschrieben. Die Erfindung ist in der beiliegenden Zeichnung dargestellt und wird nachfolgend näher beschrieben; es zeigt:

Figur 1 die Ansicht eines als Kugel ausgebildeten Raumkörpers, mit jeweils zwei parallel zueinander verlaufenden, rechtwinklig zueinander stehenden Teilungen in jeder Teilungsebene;

Figur 2 die Ansicht eines als Kugel ausgebildeten Raumkörpers nach der Figur 1, mit jeweils nur einer rechtwinklig zueinander stehenden Teilung in jeder Teilungsebene;

Figur 3 die Ansicht eines Raumkörpers der als Würfel mit kugelig abgerundeten Ecken und zylindrig abgerundeten Kanten ausgebildet ist, mit jeweils zwei parallel zueinander verlaufenden, rechtwinklig zueinander stehenden Teilungen in jeder Teilungsebene.

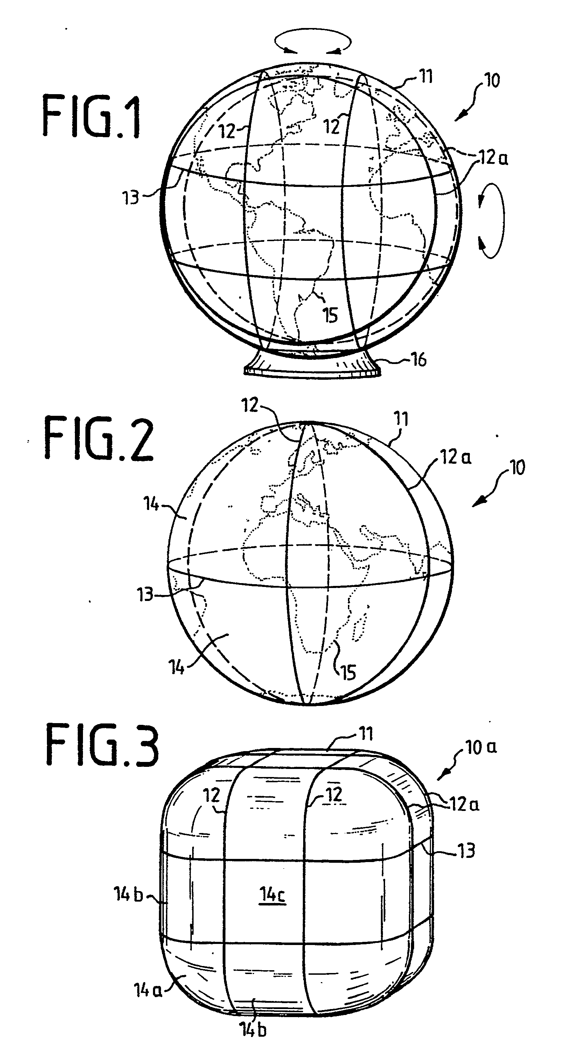

Der in der Figur 1 dargestellte Raumkörper 10 ist in einer ersten Teilungsebene, mit zwei, in der gezeigten Ansicht senkrecht verlaufenden, ersten Teilungen 12 versehen. Die beiden Teilungen 12 verlaufen parallel zueinander. In einer zweiten Teilungsebene sind rechtwinklig zu den ersten Teilungen 12 waagerecht parallel zueinander verlaufende zweite Teilungen 13 vorgesehen. Wiederum rechtwinklig zu der ersten Teilungsebene und der zweiten Teilungsebene verläuft eine dritte Teilungsebene, in der zwei weitere, ebenfalls parallel zueinander verlaufende Teilungen 12a vorgesehen sind.

Durch diese Teilungen 12, 12a und 13 entstehen insgesamt sechundzwanzig Teilkörper oder Segmente 14, die auf nicht dargestellten, in allen drei Dimensionen verlaufenden, jeweils senkrecht aufeinander stehenden Drehachsen drehbar sind.

Die Oberfläche 11 ist als Druckträger ausgebildet und mit einem Aufdruck 15 in Form der Erdoberfläche versehen; auch kann die Mondoberfläche aufgedruckt sein oder auf die Oberfläche 11 sind reliefartige Erhöhungen und Vertreifungen in Form und Gestalt der Oberfläche bekannter Himmelskörper aufgebracht. Um ihn abstellen zu können, ist der Raumkörper 10 mit einem Ablagefuß 16 versehen, auf den er beispielsweise lose aufgelegt werden kann.

Bei der in der Figur 2 dargestellten Ausführung ist in jeder der drei Teilungsebenen jeweils nur eine Teilung 12, 12a und 13 vorgesehen. Durch diese Teilungen entstehen nur acht Teilkörper oder Segmente 14, die einander leichter zugeordnet werden können.

Bei der in der Figur 3 dargestellten Ausführung ist der Raumkörper als ein Würfel 10a ausgeführt, dessen Ecken als Achtelkugeln 14a ausgebildet sind. Jede der drei in einer anderen Dimension verlaufenden Würfelflächen entspricht einer Teilungsebene, die jeweils wiederum durch zwei parallel zueinander verlaufende Teilungen 12, 12a und 13 unterteilt sind. Dadurch entstehen zwischen den achtelkugelig ausgebildeten Ecken 14a Kanten 14b, die viertelzylindrig abgerundet sind. Die in den sechs Würfelflächen befindlichen Segmente 14c weisen dabei eine quadratische Oberfläche auf.

## Patentansprüche

1. Raumkörper, der durch parallel zueinander verlaufende, sich rechtwinklig schneidende Teilungen in eine Vielzahl von Segmenten unterteilt ist, und die Segmente an dreidimensional senkrecht zueinander verlaufenden Gelenkwellen gegeneinander verdrehbar sind, dadurch gekennzeichnet, daß der Raumkörper (10) als eine Kugel (10) ausgebildet ist.

2. Raumkörper nach Anspruch 1, dadurch gekennzeichnet, daß der Raumkörper als ein Würfel (10a) mit kugelig abgerundeten Ecken (14a) und teilzylindrig abgerundeten Kanten (14b) ausgebildet ist.

3. Raumkörper nach Anspruch 1, dadurch gekennzeichnet, daß der Raumkörper (10, 10a) drei jeweils senkrecht zueinander verlaufende Teilungsebenen aufweist und in jeder der drei senkrecht zueinander verlaufenden Teilungsebenen zwei parallele Teilungen (12, 12a, 13) vorgesehen sind.

4. Raumkörper nach Anspruch 1, dadurch gekennzeichnet, daß in jeder der drei senkrecht zueinander verlaufenden Teilungsebenen nur eine Teilung (12, 12a, 13) vorgesehen ist.

5. Raumkörper nach den Ansprüchen 1 bis 4, dadurch gekennzeichnet, daß die Oberfläche (11) des Raumkörpers (10) mit einem Aufdruck (15) versehen ist, der den Konturen eines bekannten Himmelskörpers entspricht.

6. Raumkörper nach den Ansprüchen 1 und 5, dadurch gekennzeichnet, daß die Oberfläche (11) des Raumkörpers (10) mit einem der Erdoberfläche entsprechenden Globusaufdruck (15) versehen ist.

7. Raumkörper nach den Ansprüchen 1 bis 4, dadurch gekennzeichnet, daß die Oberfläche (11) des Raumkörpers (10) reliefartige Erhöhungen und Vertiefungen aufweist, die den Konturen eines bekannten Himmelskörpers entspricht.

8. Raumkörper nach den Ansprüchen 1 und 7, dadurch gekennzeichnet, daß die Oberfläche (11) des Raumkörpers (10) reliefartige Erhöhungen und Vertiefungen aufweist, die den Konturen der Erd- oder Mondoberfläche entspricht.

9. Raumkörper nach den Ansprüchen 1 bis 8, dadurch gekennzeichnet, daß der Raumkörper (10) mit einem Ablagefuß (16) versehen ist.

10. Raumkörper nach den Ansprüchen 1 und 9, dadurch gekennzeichnet, daß der Raumkörper (10) lose auf einen Ablagefuß (16) abstellbar ist.

FIG.1

11
10
12
12
12 a
13
15
16

FIG.2

12
11
12 a
14
10
13
14
15

FIG.3

11
10 a
12
12
12 a
13
14 b
14 c
14 a
14 b

Europäisches
Patentamt

# EUROPÄISCHER RECHERCHENBERICHT

Nummer der Anmeldung

EP 91 25 0055

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 865 323 (HEUSINKVELD)<br>* Spalte 5, Zeilen 44-50; Figur 7B *<br>--- | 1,4-6 | A 63 F 9/08 |
| X | WO-A-8 301 203 (TORRES)<br>* Seite 10, Zeilen 8-13; Figuren 6,7 * | 1,3,5,6 | |
| Y | <br>--- | 7-10 | |
| Y | US-A-4 257 606 (LAUNZEL)<br>* Spalte 3, Zeilen 45-48; Figur 4 *<br>--- | 7,8 | |
| Y | US-A-4 844 467 (GYENGE et al.)<br>* Spalte 5, Zeilen 41-43; Figur 1 *<br>----- | 9,10 | |

RECHERCHIERTE SACHGEBIETE (Int. Cl.5)

A 63 F

Der vorliegende Recherchenbericht wurde für alle Patentansprüche erstellt

| Recherchenort | Abschlußdatum der Recherche | Prüfer |
|---|---|---|
| DEN HAAG | 30-05-1991 | GLAS J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)